(19) Europäisches Patentamt / European Patent Office / Office européen des brevets

(11) **EP 2 021 771 B1**

(12) **FASCICULE DE BREVET EUROPEEN**

(45) Date de publication et mention de la délivrance du brevet:
**17.03.2010 Bulletin 2010/11**

(21) Numéro de dépôt: **07729581.4**

(22) Date de dépôt: **29.05.2007**

(51) Int Cl.:
**G01N 21/55** (2006.01)   **G01J 3/02** (2006.01)
**G02B 7/32** (2006.01)

(86) Numéro de dépôt international:
**PCT/EP2007/055158**

(87) Numéro de publication internationale:
**WO 2007/138032 (06.12.2007 Gazette 2007/49)**

(54) **DISPOSITIF ET PROCEDE DE MESURE PERMETTANT DE CARACTERISER DES SURFACES PAR REFLECTOMETRIE**

VORRICHTUNG UND MESSVERFAHREN ZUR CHARAKTERISIERUNG VON OBERFLÄCHEN MITTELS REFLEKTOMETRIE

DEVICE AND MEASUREMENT METHOD FOR CHARACTERIZING SURFACES BY MEANS OF REFLECTOMETRY

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **30.05.2006 FR 0651951**

(43) Date de publication de la demande:
**11.02.2009 Bulletin 2009/07**

(73) Titulaire: **COMMISSARIAT A L'ENERGIE ATOMIQUE**
**75015 Paris (FR)**

(72) Inventeurs:
• **PIOMBINI, Hervé**
**F-37320 Esvres Sur Indre (FR)**
• **VOARINO, Philippe**
**F-37000 Tours (FR)**

(74) Mandataire: **Ilgart, Jean-Christophe et al**
**Brevalex**
**3, rue du Docteur Lancereaux**
**75008 Paris (FR)**

(56) Documents cités:
**US-A- 5 747 813    US-A1- 2003 071 994**

**Description**

**DOMAINE TECHNIQUE**

L'invention concerne un dispositif et un procédé de mesure de caractérisation par réflectométrie.

**ÉTAT DE LA TECHNIQUE ANTÉRIEURE**

Comme décrit dans le document référencé [1] en fin de description la spectrométrie est l'étude de la distribution d'amplitude ou de puissance (carré de l'amplitude) d'une grandeur en fonction de la fréquence. En optique, le terme « spectrométrie » désigne plus particulièrement l'ensemble des techniques instrumentales d'analyse de la densité spectrale de puissance, la spectroscopie étant plutôt la science des spectres (spectroscopies atomique et moléculaire).

La formidable quantité d'informations contenue dans un spectre optique à moyenne ou haute résolution, liée aux progrès récents faits dans la construction des spectromètres et leur automatisation, fait de la spectrométrie optique une technique aux applications nombreuses, depuis les contrôles de processus en génie chimique jusqu'aux analyses biomédicales, en passant par la surveillance de l'environnement ou le contrôle du fonctionnement d'un moteur à explosion.

Le terme de « spectrophotomètre » est un terme employé par les chimistes et les vendeurs de spectromètres. C'est ce terme que l'on utilise ci-dessous.

Actuellement, les spectrophotomètres commerciaux sont des appareils qui sont classiquement utilisés en transmission avec une bonne précision mais avec une précision moindre en réflexion. Pour certaines applications, en particulier pour les matériaux opaques, il est nécessaire de connaître le coefficient de réflexion avec une bonne précision. Dans ce cas précis, les précisions obtenues avec un tel appareil par le National Physical Laboratory (UK) sur des échantillons en aluminium (certificat de calibration) sont de $\pm$ 0.5% sur [340-740 nm] et de $\pm$ 1,1% sur [740-850 nm] à $2\sigma$, $\sigma$ étant l'écart type du signal mesuré.

Il existe différentes manières de mesurer le flux réfléchi qu'il soit spéculaire ou diffus (utilisation d'une sphère d'intégration), soit de manière spectrale (cas des spectrophotomètres classiques), soit de manière temporelle (cas des spectromètres à transformée de Fournier).

Dans le cas d'un flux réfléchi spéculaire, qui est celui de l'invention, la réflexion est généralement obtenue par une modification du trajet optique de la voie de mesure pour introduire l'échantillon à mesurer.

Dans ce cas, les supports d'échantillons n'ont pas la rigidité mécanique nécessaire pour un bon repositionnement et la surface du spot lumineux sur l'échantillon est de quelques dizaines de mm$^2$ ce qui induit une mesure globale pouvant entraîner une imprécision de mesure si l'échantillon n'est pas parfaitement plan.

Le document référencé [2] en fin de description décrit un spectrophotomètre qui a été développé pour mesurer la réflectance ou la transmittance absolue d'éléments ou de systèmes optiques.

Dans ce spectrophotomètre, un faisceau monochromatique, généré par une lampe et un monochromateur, est divisé par un séparateur de faisceau. Le faisceau transmis et le faisceau réfléchi sont dirigés vers un disque rotatif à fentes qui hache les deux faisceaux à deux fréquences différentes. Le faisceau de mesure, qui est le faisceau transmis par le séparateur, et le faisceau de référence, qui est le faisceau réfléchi par le séparateur, sont réfléchis en retour par des miroirs. L'échantillon à tester est placé dans le faisceau de mesure. La partie réfléchie du faisceau de mesure retour et la partie transmise du faisceau référence retour sont combinées à nouveau et dirigées vers un détecteur.

Ce spectrophotomètre permet des mesures proches de l'axe optique et hors axe optique. Mais, quand il réalise des mesures hors axe optique, il ne contrôle pas la focalisation sur l'échantillon. Quand il réalise des mesures dans l'axe optique, il ne contrôle pas la focalisation et il ne mesure que des échantillons avec une très faible courbure.

La présente invention a pour objet de résoudre un tel problème technique.

Le document référencé [3] décrit un réflectomètre comprenant une source qui émet un faisceau lumineux, un détecteur, des moyens de traitement et de contrôle de ce faisceau lumineux de manière à le focaliser sur une surface réfléchissante à mesurer sous la forme d'un spot et à recevoir le faisceau réfléchi sur ce détecteur, une caméra et des moyens pour imager ce spot sur ce détecteur et sur cette caméra, ladite caméra étant reliée à des moyens de commande et d'acquisition de manière à réaliser une mise au point automatique du spot sur la surface réfléchissante à mesurer.

Le document référencé [4] divulgue également un réflectomètre comprenant un système de mise au point automatique du spot utilisant une source lumineuse blanche et une caméra et un système d'autofocalisation du spot sur la surface réfléchissante utilisant un laser et un détecteur du foyer.

**EXPOSÉ DE L'INVENTION**

L'invention concerne un dispositif de mesure de caractérisation par réflectométrie comprenant une source qui émet un faisceau lumineux, un détecteur, des moyens de traitement et de contrôle de ce faisceau lumineux de manière à le focaliser sur une surface réfléchissante à mesurer sous la forme d'un spot et à recevoir celui-ci sur ce détecteur, des moyens de commande et d'acquisition, une caméra et des moyens pour imager ce spot sur ce détecteur et sur cette caméra, caractérisé en ce que cette caméra est reliée aux moyens de commande et d'acquisition de manière à réaliser une mise au point automatique du spot sur la surface réfléchissante à mesurer et à conjuguer automatiquement la surface réfléchissante à mesurer avec la surface du détecteur.

Avantageusement la surface du spot est inférieure à 5 mm$^2$.

Le dispositif de l'invention permet de contrôler automatiquement la focalisation du faisceau incident sur la surface à mesurer et la conjugaison entre la surface de l'échantillon et la surface du récepteur par un traitement d'image.

L'invention permet de réaliser une mesure précise d'un objet situé sur l'axe optique ou à proximité de celui-ci, d'un échantillon présentant une certaine courbure.

Dans un mode de réalisation avantageux les optiques de focalisation utilisées en détection sont surdimensionnées par rapport aux optiques de focalisation traversées par le faisceau incident.

Un tel surdimensionnement des optiques de focalisation permet de mesurer des courbures plus importantes que le spectrophotomètre décrit dans le document référencé [2], qui dispose d'optiques de réception non surdimensionnées. L'utilisation d'optiques surdimensionnées permet d'avoir une ouverture numérique plus forte et par conséquent une meilleure précision de focalisation avec un meilleur contrôle de l'étendue géométrique.

Avantageusement, le dispositif de l'invention peut comprendre un support mobile sur lequel est disposé l'échantillon. Le faisceau lumineux incident peut être émis par un laser. Le faisceau lumineux incident peut être véhiculé par une fibre optique. Le dispositif de l'invention peut comprendre des cubes séparateurs réalisés à partir de jonctions en Y en fibres optiques.

Dans un exemple de réalisation, le dispositif de l'invention comprend :

- une source lumineuse blanche ayant une forte luminance directionnelle,
- un condenseur asphérique,
- une lentille de focalisation achromatique,
- un monochromateur avec un réseau qui peut être blazé,
- un disque rotatif,
- un système optique de collimation achromatique et un filtre spatial,
- une roue porte filtres,
- un premier cube séparateur,
- une voie de référence qui comprend une optique de focalisation, une photodiode reliée à un processeur de commande et d'acquisition,
- une voie de l'échantillon qui comprend une optique de focalisation,
- un support sur lequel est monté l'échantillon et qui est réglable via une liaison utilisant un protocole de communication par l'intermédiaire du processeur,
- un deuxième cube séparateur,
- une voie de mesure qui comprend une optique de focalisation achromatique, un détecteur relié au processeur,
- une voie d'imagerie qui comprend une optique de focalisation achromatique, un objectif de microscope, une caméra reliée au processeur.

L'invention concerne également un procédé de mesure de caractérisation par réflectométrie dans lequel on traite et on contrôle un faisceau lumineux incident de manière à le focaliser sur une surface réfléchissante à mesurer sous la forme d'un spot et à recevoir celui-ci sur un détecteur, dans lequel on image ce spot sur ce détecteur et sur une caméra, caractérisé en ce que l'on acquiert les données en sortie de cette caméra de manière à réaliser une mise au point automatique du spot sur la surface réfléchissante à mesurer et à conjuguer automatiquement la surface réfléchissante à mesurer avec la surface du détecteur.

Avantageusement la surface de ce spot est inférieure à 5 mm$^2$.

Dans un mode de réalisation avantageux on utilise des optiques de focalisation en détection surdimensionnées par rapport aux optiques de focalisation traversées par le faisceau incident.

Ce procédé peut comprendre les étapes suivantes :

- mettre en route les instruments,
- choisir les paramètres spectraux,
- positionner l'échantillon,
- en parcourant toutes les longueurs d'onde $\lambda i$, en faisant varier une variable i entre 0 et N :

  • positionner un monochromateur sur le trajet du faisceau incident à une longueur d'onde $\lambda i$ telle que $\lambda i = \lambda$ min + i$x\Delta\lambda$,

- positionner un filtre adéquat sur le trajet du faisceau incident,
- focaliser le faisceau sur l'échantillon grâce au traitement d'image,
- asservir la position de l'échantillon,
- acquérir les signaux pour la mesure.

Le dispositif et le procédé de l'invention sont utilisables dans des domaines variés tels que les domaines de la métrologie, de la colorimétrie, du contrôle de systèmes optiques, des analyses chimiques et physiques, du codage optique, et dans différents autres domaines où une étude des grandeurs liées aux spectres lumineux est nécessaire.

L'invention peut ainsi être utilisée pour :

- le contrôle spectral de systèmes optiques,
- la mesure de l'hétérogénéité d'échantillons car elle permet de réaliser des mesures locales de réflexion à la surface de ces échantillons, ceux-ci pouvant être des tôles, des miroirs plans et non plans pour l'industrie optique ou autres,
- la caractérisation de la réflexion d'échantillons faiblement courbés,
- la mesure de la réflexion de surface sur site, avec une tête optique ajustable, en utilisant un appareil portable,
- l'obtention avec une grande précision de données colorimétriques de la surface réfléchissante,
- la mesure de pièces en forme,
- un ajout du dispositif de l'invention sous forme de module dans des spectrophotomètres existants,
- la détermination de la diffusion (BRDF ou « Bidirectionnal Reflectance Distribution Function ») d'un objet avec toutes les applications qui sont associées à ce type de mesures (contrôle de pollution, de rugosité).

## BRÈVE DESCRIPTION DES DESSINS

La figure 1 illustre le dispositif de mesure de l'invention.
La figure 2 illustre la définition de l'étendue géométrique.
La figure 3 illustre la définition dans l'espace objet et dans l'espace image de l'étendue géométrique.
Les figures 4A et 4B illustrent le rôle collecteur d'une optique de focalisation surdimensionnée.
La figure 5 illustre les différentes étapes du procédé de l'invention.
La figure 6 illustre un exemple de réalisation du dispositif de l'invention.
Les figures 7A et 7B illustrent la réflexion en fonction de la longueur d'onde respectivement d'un miroir diélectrique (figure 7A), et d'un filtre passe haut et d'un échantillon d'or (figure 7B).
La figure 8A illustre la réflexion en fonction de la longueur d'onde d'un miroir sphérique, illustré sur la figure 8B.

## EXPOSÉ DÉTAILLÉ DE MODES DE RÉALISATION PARTICULIERS

Dans la suite, pour simplifier la description, on considère la surface réfléchissante à mesurer comme la surface d'un échantillon constitué par un réflecteur opaque. Mais cette surface réfléchissante à mesurer peut, bien entendu, être la surface d'un objet, par exemple celle d'une carrosserie de voiture.

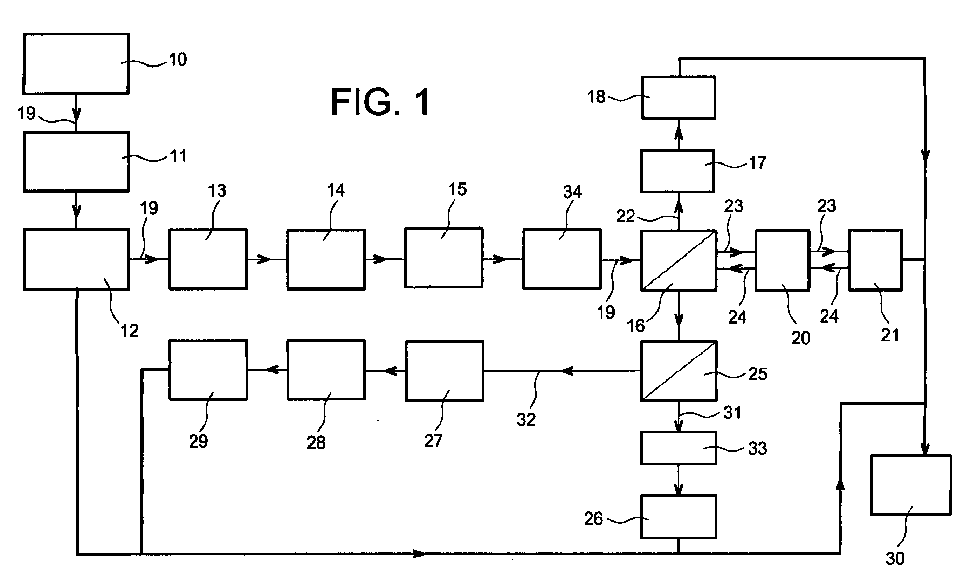

Le dispositif de mesure de caractérisation de l'invention, illustré sur la figure 1, comprend :

- une source lumineuse blanche intense 10, qui émet un faisceau lumineux 19,
- une optique 11 de collection et de focalisation de ce faisceau lumineux 19,
- un monochromateur 12, qui est un système comportant un élément dispersif à prisme ou à réseau (qui peut être blazé ou pas) qui disperse la lumière blanche suivant la longueur d'onde et suivant différents ordres dans le cas d'un réseau,
- un module 13 de modulation du faisceau lumineux, par exemple un disque rotatif opaque ayant des ouvertures transparentes régulières pour transmettre la lumière de manière synchrone lorsque de disque est animé d'un mouvement de rotation à vitesse constante, permettant de minimiser le bruit grâce à un hétérodynage,
- un module 14 de filtrage spatial de ce faisceau lumineux,
- une optique 15 de collimation de ce faisceau lumineux,
- un module 34 de filtrage de ce faisceau lumineux,
- une première optique séparatrice 16 divisant le faisceau lumineux 19 en deux faisceaux 22 et 23 correspondant respectivement à une voie de référence et la voie de l'échantillon.

Le dispositif de mesure de l'invention comprend, en outre :

- sur la voie de référence :

  • une optique de focalisation (par exemple une lentille) 17, et
  • un détecteur 18, relié à une unité de commande et d'acquisition 30, permettant une détection synchrone,

- sur la voie de l'échantillon :

  • une optique de focalisation 20 surdimensionnée,
  • un dispositif porte-échantillon 21, qui comprend un support mobile sur lequel est disposé un échantillon constitué d'un réflecteur opaque, et qui retourne vers l'optique de focalisation 20 un faisceau réfléchi 24,
  • une seconde optique séparatrice 25 de ce faisceau réfléchi 24 en deux faisceaux 31 et 32 correspondant respectivement à une voie de mesure et à une voie d'imagerie,
  • sur la voie de mesure, une optique de focalisation 33 surdimensionnée et un détecteur 26, relié à l'unité de commande et d'acquisition 30, permettant une détection synchrone,
  • sur la voie d'imagerie, une optique de focalisation 27 surdimensionnée, un objectif de microscope 28 et une caméra 29 reliée à l'unité de commande et d'acquisition 30.

Dans ce dispositif le faisceau 19 est focalisé sur la surface à mesurer, qui ici est la surface d'un échantillon, sous la forme d'un spot qui est imagé sur le détecteur 26 et sur la caméra 29, ce qui permet de réaliser une mise au point automatique de l'image sur ledit échantillon à contrôler et à conjuguer la surface de l'échantillon et la surface du détecteur. Une telle caractéristique permet de différencier avantageusement l'invention du document référencé [2], dans lequel seul le flux incident est focalisé.

La surface de ce spot sur l'échantillon est inférieure à 5 mm$^2$, par exemple d'environ 1 mm$^2$, ce qui permet de mesurer des pièces en forme. Les optiques de focalisation de réception peuvent être surdimensionnées par rapport aux optiques de focalisation traversées par le faisceau incident, ce qui permet de récupérer au maximum le faisceau incident quand l'angle d'incidence n'est pas nul. L'utilisation d'optiques de focalisation surdimensionnées permet d'avoir une ouverture numérique image plus forte et donc une meilleure précision de focalisation avec un meilleur contrôle de l'étendue géométrique. Ces différentes caractéristiques permettent d'avoir une bonne précision de mesure de la réflexion spéculaire.

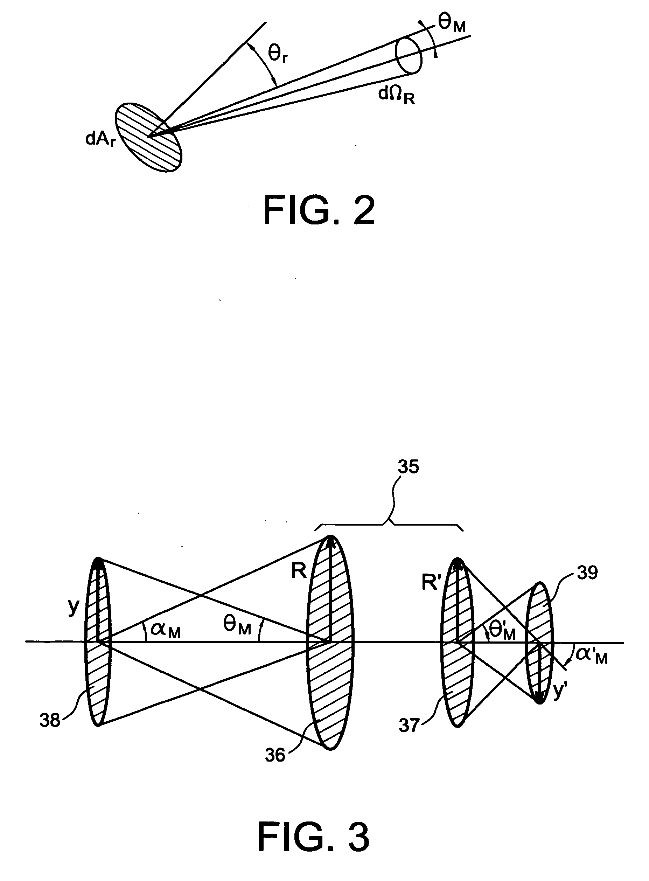

Il y a, ainsi, conservation de l'étendue géométrique vue par le récepteur en conjuguant la surface réfléchissante de l'échantillon (l'objet) et le récepteur (l'image). L'étendue géométrique ($d^2G$) est définie comme étant le produit entre l'aire du récepteur ($d\Delta_r$), le cosinus de l'angle entre la normale locale au récepteur et la direction de réception ($\theta_R$), et l'angle au solide sous lequel est vue la source ($d\Omega_R$), comme illustré sur la figure 2.

On a ainsi : $d^2G = dA_r.\cos\theta_R. d\Omega_R$

Comme les optiques de focalisation et de collimation sont circulaires, il existe une symétrie de révolution autour de l'axe optique. L'étendue géométrique s'exprime alors, avec $\theta_M$ le demi-angle au sommet d'émission, par : $G = \pi . A_r . \sin^2 \theta_M$. L'étendue optique définie par le rapport au carré de l'indice du milieu par l'étendue géométrique s'exprime, selon la figure 3, pour les espaces objet et image du système optique et réception 35, qui comporte une pupille d'entrée 36 et une pupille de sortie 37.

Pour l'objet réflecteur 38 : $n^2.G = (\pi.n.R.\sin\theta_M)^2$

Pour l'image détecteur 39 : $n'^2.G' (\pi. n' . R' \sin\theta'_M)^2$

Si le système est aplanétique (objet petit et situé près de l'axe optique), on respecte la relation des sinus d'Abbe pour avoir la relation suivante :

$$n.y.\sin\alpha_M = n.R.\sin\theta_M = n'.R'\sin\theta'_M = n'.y'.\sin\alpha'_M$$

où n (respectivement n') est l'indice milieu objet (respectivement image), y (respectivement y') la hauteur de l'objet (respectivement image), $\alpha_M$ est le demi-angle au sommet sous lequel l'échantillon réflecteur voit la pupille d'entrée, $\alpha_{M'}$ est le demi-angle au sommet sous lequel le détecteur voit la pupille de sortie, R est le rayon de la pupille d'entrée 36, R' est le rayon de la pupille de sortie 37, $\theta_M$ est le demi-angle au sommet sous lequel la pupille d'entrée 36 voit l'échantillon réflecteur 38, $\theta_M$, est le demi-angle au sommet sous lequel la pupille de sortie 37 voit le détecteur 39.

Ainsi, en conservant le champ (y) et l'ouverture ($\alpha_M$) dans le système optique de réception, par focalisation, la totalité du faisceau réfléchi est captée par le détecteur 39. Cette focalisation est réalisée, pour chaque longueur d'onde $\lambda i$, automatiquement via un système d'asservissement par imagerie. La caméra 29 donne l'image du faisceau sur la surface de l'échantillon à mesurer. La focalisation s'effectue grâce au re-positionnement de l'échantillon 38 suivant l'axe optique, et peut avoir, comme critère d'arrêt, la netteté du spot. Toutefois, d'autres critères d'arrêt peuvent être considérés : par exemple l'image d'une mire ou de défauts à la surface de l'échantillon.

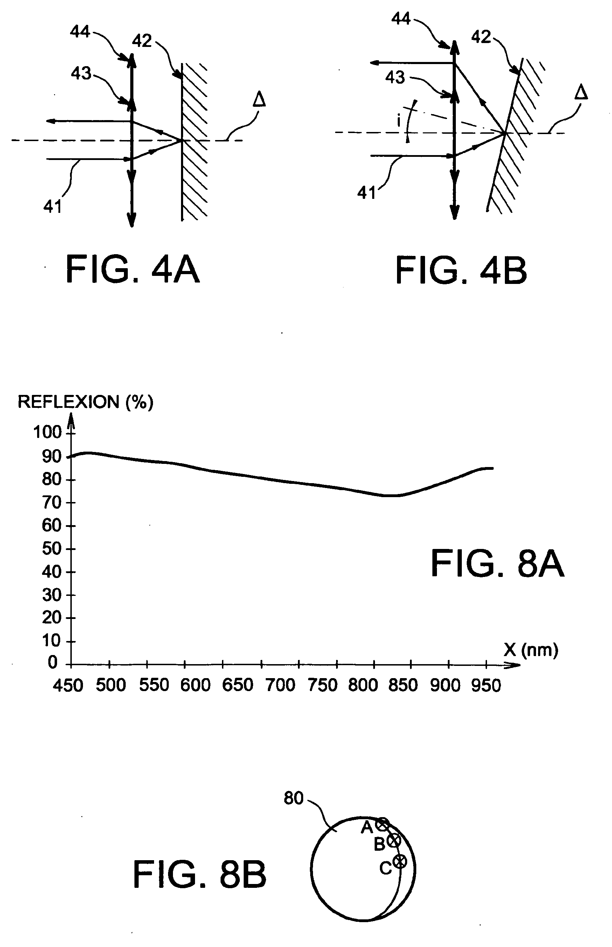

Le choix des optiques (matériaux, diamètres et focales) permet de réduire plus ou moins les coûts et les performances du procédé. La source 10 doit posséder la plus forte luminance spectrale possible et émettre dans un faible cône. Le faisceau lumineux initial 19 a un diamètre nettement inférieur aux diamètres des optiques de focalisation (lentilles) et il est focalisé sur l'échantillon pour avoir une aire la plus petite possible, par exemple 1 mm². Ainsi, le spot lumineux à la surface de l'échantillon est nettement plus petit que le spot d'un spectrophotomètre classique. Le surdimensionnement des optiques de focalisation par rapport à la taille du spot augmente l'angle d'acceptance i du faisceau réfléchi, comme illustré sur les figures 4A et 4B : La figure 4A illustre la réflexion d'un faisceau 41 sur un miroir 42 (échantillon réflecteur) avec une lentille 43 de 25 mm de diamètre et avec une lentille 44 de 50 mm de diamètre, $\Delta$ étant l'axe optique. La figure 4B illustre la réflexion de ce même faisceau 41 sur le même miroir 42 avec un grand angle d'incidence i. L'aberration chromatique est minimisée en choisissant des lentilles achromatiques. L'automatisation du support de l'échantillon donne aussi une possibilité de cartographier en réflexion l'échantillon pour quantifier les hétérogénéités.

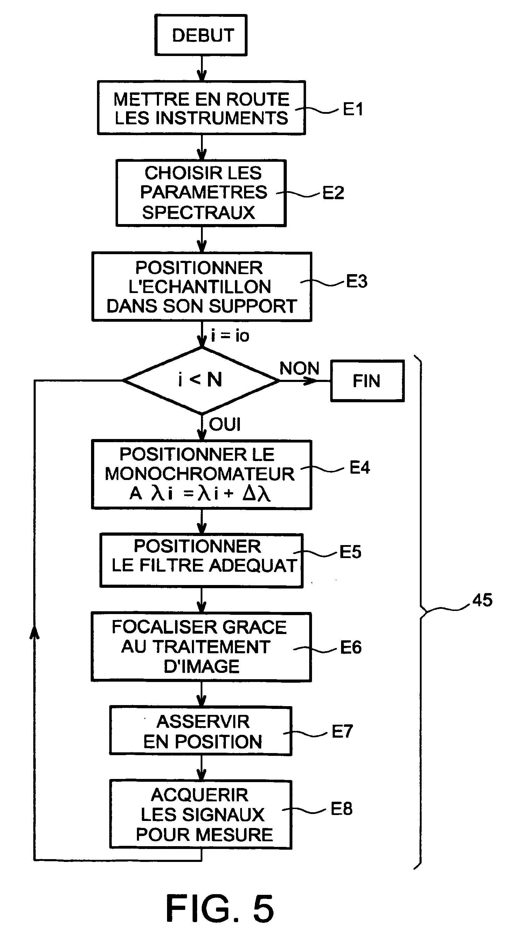

Le procédé de l'invention, illustré sur la figure 5 comprend les étapes suivantes :

- mettre en route les instruments : i.e. allumer la source, les détecteurs, et les instruments de contrôle (E1),
- choisir les paramètres spectraux : plage et résolution spectrale (E2),
- positionner l'échantillon dans son support (E3),
- en parcourant toutes les longueurs d'onde $\lambda i$ (ou lambda i), en faisant varier une variable i entre 0 et entre 0 et N (boucle 45) :

  • positionner le monochromateur 12 à une longueur d'onde $\lambda i$ telle que $\lambda i = \lambda \min + i x \Delta \lambda$ (E4),
  • positionner le module de filtrage adéquat 14 par exemple en positionnant le module de modulation 13 (E5) ,
  • focaliser le faisceau 24 sur l'échantillon grâce au traitement d'image (E6),
  • asservir en position l'échantillon (E7),
  • acquérir les signaux pour la mesure (E8).

Différentes variantes de réalisation sont possibles :

- Le procédé de l'invention peut s'appliquer à des études monospectrales avec une ou plusieurs sources lumineuses de type laser. Il est possible d'utiliser, par exemple, dans l'ultraviolet un laser excimère, dans le visible un laser HeNe, dans le proche infrarouge une diode laser, ou tout autre laser.
- La source lumineuse 10 peut être fibrée ou pas, blanche ou émettant des raies spectrales.
- Le dispositif de l'invention peut être réalisé avec des fibres optiques. Les cubes séparateurs 16 et 25, par exemple, peuvent êtres réalisés à partir de jonctions Y en fibres optiques mises à la chaîne.
- Les optiques séparatrices peuvent être des cubes, des lames ou tout composant séparant la lumière en deux parties plus ou moins égales. Cependant, pour avoir le maximum de flux sur les voies de mesure et d'image on utilise avantageusement des séparateurs 50/50.
- Les optiques de focalisation ou une partie de celles-ci peuvent être remplacées par des miroirs adaptés.
- Le dispositif peut être optimisé en utilisant des platines de translation motorisés supplémentaires, par exemple pour déplacer les optiques de focalisation de la voie d'imagerie, pour réduire l'influence des aberrations chromatiques résiduelles.
- Le support de l'échantillon peut ne pas être automatisé pour réaliser l'asservissement. L'asservissement peut se faire à l'aide de platines motorisées supportant les optiques de focalisation. Une platine peut être ajoutée pour asservir la position du système optique par rapport à l'échantillon.
- Le dispositif de l'invention peut être intégré à d'autres spectrophotomètres.
- Le critère de la focalisation par asservissement de position peut déprendre d'un traitement d'image quelconque : algorithmes, mire, défauts de surface, rayures, piqûres, symétrie particulière du faisceau lumineux, minimum de variation de l'image en fonction de l'angle de rotation de l'échantillon.
- La focalisation peut être manuelle et être effectuée une seule fois au début de l'acquisition, en tenant compte de décalage (« offset ») du système optique dû aux aberrations chromatiques et géométriques préalablement déterminées.
- Le dispositif de l'invention peut être étendu à des mesures de diffusion.

Exemple de réalisation

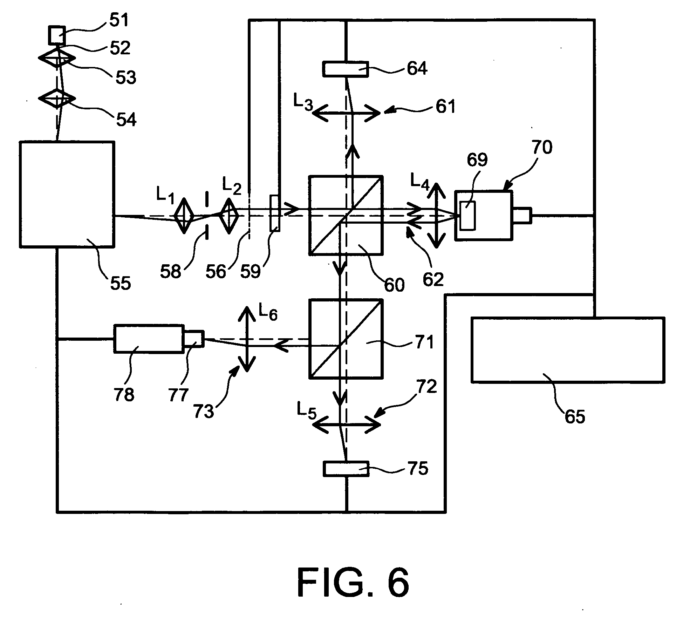

Dans un exemple de réalisation illustré sur la figure 6, le dispositif de l'invention comprend :

- une source lumineuse blanche (lampe halogène) 51 ayant une forte luminance directionnelle, qui est injectée dans une fibre optique 52 d'environ 1 mm$^2$ de surface de coeur et d'ouverture numérique par exemple 0,22,
- un condenseur 53, qui est une optique à courte focale par rapport à son diamètre, ce qui permet de collecter le maximum de lumière grâce à un angle au solide de réception plus important, asphérique, i.e. corrigé de l'aberration de sphéricité ; ce condenseur collectant donc le maximum de flux issu de la fibre optique 52,
- une lentille de focalisation achromatique 54, qui couple l'énergie dans un monochromateur 55 en accord avec son ouverture numérique,
- le monochromateur 55, qui a un réseau blazé (c'est-à-dire construit de manière à disperser le maximum du flux optique (dans un seul ordre, généralement l'ordre 1) dans le visible dispersant la lumière, le choix du réseau utilisé fixant la plage spectrale et la finesse),
- un disque rotatif 56, qui module le flux lumineux afin de filtrer le signal grâce à une détection synchrone, la fréquence de modulation étant optimisée pour minimiser les bruits optiques et électroniques présents dans le local,
- un système optique de collimation achromatique (optiques de focalisation L1, L2) et un filtre spatial 58, par exemple un diaphragme, donnant la dimension du spot lumineux sur l'échantillon,
- une roue porte filtres 59, qui rejette l'harmonique parasite issue du monochromateur 55, cette roue porte filtres étant un système mécanique comprenant quatre positions, un filtre spectral étant disposé sur chacune de ces positions pour rejeter les harmoniques parasites de l'élément dispersif à savoir, dans le cas présent le monochromateur, cette roue porte filtres pouvant aussi être utilisée pour introduire des densités neutres sur le trajet du faisceau lumineux pour éviter la saturation de certains détecteurs (utilisation de photomultiplicateur) lors d'une utilisation d'une source intense,
- un premier cube séparateur 60 par exemple de 50 mm de côté, qui divise le faisceau lumineux en deux parties; pour le faisceau incident le cube 60 sépare le faisceau sur la voie de référence 61 et sur la voie de l'échantillon 62, pour le faisceau réfléchi il sépare la voie de mesure d'une voie parasite,
- la voie de référence 61, qui comprend une optique de focalisation L3, une photodiode 64 permettant une détection synchrone, et étant reliée à un processeur de commande et d'acquisition 65,
- la voie de l'échantillon 62, qui comprend une optique de focalisation L4 réalisée avec un condenseur asphérique (réduction des aberrations sphériques) par exemple de 50 mm de diamètre,
- l'échantillon 69, qui est un réflecteur opaque, dont la transmission est nulle, monté dans un support 70 réglable selon deux degrés de liberté (en $\theta$ et $\phi$) lui-même monté sur des platines x, y motorisées via une liaison utilisant un protocole de communication, par exemple de type IEEE, par l'intermédiaire du processeur 65,
- un deuxième cube séparateur 71 par exemple de 50 mm de côté, qui divise le faisceau réfléchi sur une voie de mesure 72 et sur une voie d'imagerie 73,
- la voie de mesure 72, qui comprend une optique de focalisation achromatique L5 par exemple de 50 mm de diamètre, un détecteur 75, permettant une détection synchrone, reliée au processeur 65,
- la voie d'imagerie 73, qui comprend une même optique de focalisation achromatique L6 par exemple de 50 mm de diamètre, un objectif de microscope (par exemple x10) 77, une caméra 78 reliée au processeur 65.

Dans cet exemple de réalisation, la source lumineuse, blanche au départ est résolue spectralement pour obtenir une onde quasi-monochromatique à la sortie du monochromateur. Le faisceau est ensuite filtré spatialement par le filtre spatial 58 situé entre les optiques de focalisation L1 et L2 qui lui-même est imagé à la surface de la photodiode de référence 64 et de l'échantillon 69, puis séparé spatialement par l'intermédiaire du premier cube séparateur 60 vers le détecteur de référence et vers la voie de l'échantillon. La roue porte filtres 59 permet de rejeter les ordres supérieurs issus du monochromateur 55. Ensuite, une partie du flux réfléchi par l'échantillon se réfléchit sur le premier cube séparateur 60 pour être de nouveau séparé spatialement par le deuxième cube séparateur 71 dont la voie transmise est focalisée à la surface du détecteur de mesure 75, et la voie réfléchie imagée par la caméra 78 servant à asservir la focalisation via le porte échantillon motorisé.

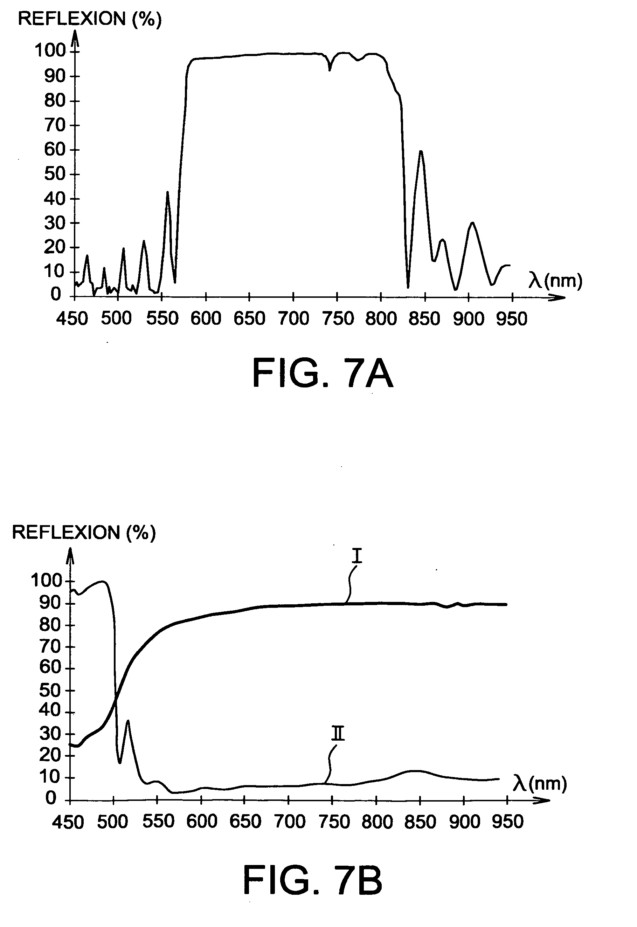

Sur la figure 7A l'échantillon est un miroir diélectrique référencé, qui est constitué d'un empilement de couches d'oxyde bas et haut indice alternées, qui montre une bonne résolution spectrale. Ce miroir est un miroir double qui présente des pics de résonance parfaitement visibles sur la courbe. Le niveau maximal mesuré est voisin de 100%, ce qui correspond à la valeur maximale de la réflexion de ce miroir (valeur mesurée sur un banc de mesures faibles pertes qui évalue la différence de temps de vol d'une impulsion laser d'une cavité contenant ou non le miroir à mesurer).

Sur la figure 7B l'échantillon est un filtre passe-haut (courbe II) ou un échantillon d'or (courbe I).

La figure 8A illustre la réflexion en fonction de la longueur d'onde d'un miroir sphérique, illustré sur la figure 8B, de focale 160 mm et de diamètre 25 mm, présentant un angle maximum d'inclinaison de 4,4°. Cette figure illustre le coefficient de réflexion pour un tel miroir sphérique recouvert d'une couche d'aluminium en trois points de mesure distincts A, B et C de sa surface. Le coefficient de réflexion est identique quelque soit la longueur d'onde. Pour ces trois points A, B et C, les courbes se superposent. De plus on retrouve les valeurs classiques de l'aluminium obtenu sur un substrat plan (89% vers 500 nm) et on visualise le creux vers 850 nm. Cette mesure valide le dispositif de l'invention qui permet de mesurer des pièces non planes.

## REFERENCE

[1] Patrick Bouchareine, « Spectrométrie Optique », les techniques de l'ingénieur, Traité Mesures et Contrôle, R6310, pages 1 à 31, 10/1994.

[2] D. Enard and H. Visser, « Universal spectrophotometer for determining the efficiency of optical components and systems », Applied Optics Vol. 21, No. 24, pages 4459-4464, 1982.

[3] US 2003/0071994

[4] US 5,747,814

## Revendications

1. Dispositif de mesure de caractérisation par réflectométrie comprenant une source (10) qui émet un faisceau lumineux, un détecteur (26), des moyens de traitement et de contrôle de ce faisceau lumineux (19) de manière à le focaliser sur une surface réfléchissante à mesurer sous la forme d'un spot et à recevoir celui-ci sur ce détecteur (26), des moyens de commande et d'acquisition (30), une caméra (29) et des moyens pour imager ce spot sur ce détecteur (26) et sur cette caméra (29), **caractérisé en ce que** cette caméra est reliée aux moyens de commande et d'acquisition (30) de manière à réaliser une mise au point automatique du spot sur la surface réfléchissante à mesurer et à conjuguer automatiquement la surface réfléchissante à mesurer avec la surface du détecteur.

2. Dispositif selon la revendication 1, dans lequel la surface de ce spot est inférieure à 5 mm$^2$.

3. Dispositif selon la revendication 1, dans lequel les optiques de focalisation utilisées en détection sont surdimensionnées par rapport aux optiques de focalisation traversées par le faisceau incident.

4. Dispositif selon la revendication 1, qui comprend un support mobile sur lequel est disposé la surface réfléchissante à mesurer qui est celle d'un échantillon

5. Dispositif selon la revendication 1, dans lequel la source (10) qui émet le faisceau lumineux incident (19) est un laser.

6. Dispositif selon la revendication 1, qui comprend une fibre optique pour véhiculer le faisceau lumineux incident (19).

7. Dispositif selon la revendication 6, qui comprend des cubes séparateurs réalisés à partir de jonctions en Y en fibres optiques.

8. Dispositif selon la revendication 1, qui comprend :

   - une source lumineuse blanche (51) ayant une forte luminance directionnelle (52),
   - un condenseur asphérique (53),
   - une lentille de focalisation achromatique (54),
   - un monochromateur (55), qui a un réseau blazé ou non,
   - un disque rotatif (56),
   - un système optique de collimation achromatique (L1, L2) et un filtre spatial (58),
   - une roue porte filtres (59),
   - un premier cube séparateur (60),
   - une voie de référence (61), qui comprend une optique de focalisation (L3) et une photodiode (64) reliée à un processeur de commande et d'acquisition (65),
   - une voie de l'échantillon (62), qui comprend une optique de focalisation (L4),
   - un support (70) sur lequel est monté l'échantillon et qui est réglable via une liaison utilisant un protocole de communication par l'intermédiaire du processeur (65),
   - un deuxième cube séparateur (71),

- une voie de mesure (72), qui comprend une optique de focalisation achromatique (L5) et un détecteur (75) relié au processeur (65),
- une voie d'imagerie (73), qui comprend une optique de focalisation achromatique (L6), un objectif de microscope (77) et une caméra (78) reliée au processeur (65).

9. Procédé de mesure de caractérisation par réflectométrie dans lequel on traite et on contrôle un faisceau lumineux incident de manière à le focaliser sur une surface réfléchissante à mesurer sous la forme d'un spot et à recevoir celui-ci sur un détecteur, dans lequel on image ce spot sur ce détecteur et sur une caméra, **caractérisé en ce que** l'on acquiert les données en sortie de cette caméra de manière à réaliser une mise au point automatique du spot sur la surface réfléchissante à mesurer et à conjuguer automatiquement la surface réfléchissante à mesurer avec la surface du détecteur.

10. Procédé selon la revendication 9, dans lequel la surface réfléchissante à mesurer est la surface d'un échantillon.

11. Procédé selon la revendication 9, dans lequel la surface de ce spot est inférieure à 5 mm$^2$.

12. Procédé selon la revendication 9, dans lequel on utilise des optiques de focalisation en détection surdimensionnées par rapport aux optiques de focalisation traversées par le faisceau incident.

13. Procédé selon la revendication 10, qui comprend les étapes suivantes :

- mettre en route les instruments (E1),
- choisir les paramètres spectraux (E2),
- positionner l'échantillon (E3),
- en parcourant toutes les longueurs d'onde λi, en faisant varier une variable i entre 0 et N (boucle 45) :

  • positionner un monochromateur sur le trajet du faisceau incident à une longueur d'onde λi telle que λi = λ, min + ixΔλ, (E4),
  • positionner un filtre adéquat sur le trajet du faisceau incident (E5),
  • focaliser ce faisceau incident sur l'échantillon grâce au traitement d'image (E6),
  • asservir la position de l'échantillon (E7),
  • acquérir les signaux pour la mesure (E8).

## Claims

1. Device for measuring characterisation by reflectometry including a source (10) that emits a light beam, a detector (26), means for processing and controlling this light beam (19) so as to focus it on a reflective surface to be measured in the form of a spot and to receive it on said detector (26), command and acquisition means, a camera and means for imaging said spot on said detector and on said camera, **characterized in that** said camera is connected to the command and acquisition means (30) so as to automatically focus the spot on the reflective surface to be measured and to automatically conjugate the reflective surface to be measured with the surface of the detector.

2. Device according to claim 1, in which the surface of this spot is smaller than 5 mm$^2$.

3. Device according to claim 1, in which the focusing optics used in detection are oversized with respect to the focusing optics through which the incident beam passes.

4. Device according to claim 1, which includes a mobile support on which the refractive surface to be measured, which is the surface of a sample, is placed.

5. Device according to claim 1, in which the source (10), that emits the incident light beam (19), is a laser.

6. Device according to claim 1, which comprises an optical fibre to transport the incident light beam (19).

7. Device according to claim 6, which includes separating cubes produced by optical fibre Y-junctions.

8. Device according to claim 1, which includes:

- a white light source (51) having a strong directional luminance (52),
- an aspheric condenser (53),
- an achromatic focusing lens (54),
- a monochromator (55), which has a grating that can be a blazed grating,
- a rotary disk (56),
- an optical system for achromatic collimation (L1, L2) and a spatial filter (58),
- a filter wheel (59),
- a first separating cube (60),
- a reference channel (61), which includes focusing optics (L3), and a photodiode (64) connected to a command and acquisition processor (65),
- a sample channel (62), which includes focusing optics (L4),
- a support (70) on which the sample is mounted and which is adjustable via a connection using a protocol for communication by means of the processor (65),
- a second separating cube (71),
- a measuring channel (72), which includes achromatic focusing optics (L5), and a detector (75) connected to the processor (65),
- an imaging channel (73), which includes achromatic focusing optics (L6), a microscope objective (77), and a camera (78) connected to the processor (65).

9. Process for measuring characterisation by reflectometry in which an incident light beam is processed and controlled so as to focus it on a reflective surface to be measured in the form of a spot and to receive it on a detector, in which said spot is imaged on said detector and on a camera, **characterised in that** the output data of said camera is acquired so as to automatically focus the spot on the reflective surface to be measured and to automatically conjugate the reflective surface to be measured with the surface of the detector.

10. Process according to claim 9, in which the reflective surface to be measured is the surface of a sample.

11. Process according to claim 9, in which the surface of said spot is smaller than 5 mm$^2$.

12. Process according to claim 9, in which focusing optics in detection, which are oversized with respect to the focusing optics through which the incident beam passes, are used.

13. Process according to claim 10, which includes the following steps:

- activating the instruments (E1),
- choosing the spectral parameters (E2),
- positioning the sample (E3),
- passing through all of the wavelengths $\lambda i$, changing a variable i between 0 and N (loop 45):

    • positioning a monochromator on the path of the incident beam at a wavelength $\lambda i$ so that $\lambda i = \lambda$ min + $ix\Delta\lambda$ (E4),
    • positioning a suitable filter on the path of the incident beam (E5),
    • focusing the beam on the sample owing to the image processing (E6),
    • applying positional feedback control on the sample (E7),
    • acquiring signals for the measurement (E8).


**Patentansprüche**

1. Messvorrichtung zur Charakterisierung mittels Reflektometrie, umfassend eine Quelle (10), die einen Lichtstrahl emittiert, einen Detektor (26), Mittel zum Verarbeitet und Regeln dieses Lichtstrahls (19), um ihn auf eine zu messende reflektierende Oberfläche in Form eines Lichtflecks zu fokussieren und diesen auf dem Detektor (26) zu empfangen, Steuerungs- und Erfassungsmittel (30), eine Kamera (29) und Mittel zum Abbilden dieses Lichtflecks auf diesem Detektor (26) und auf dieser Kamera (29), **dadurch gekennzeichnet, dass** diese Kamera derart mit den Steuerungs- und Erfassungsmitteln (30) verbunden ist, dass sie eine automatische Fokussierung des Lichtflecks auf der zu messenden reflektierenden Oberfläche ausführt und die zu messende reflektierende Oberfläche automatisch der Oberfläche des Detektors zuordnet.

**2.** Vorrichtung nach Anspruch 1, wobei die Fläche dieses Lichtflecks kleiner als 5 mm$^2$ ist.

**3.** Vorrichtung nach Anspruch 1, wobei die Fokussieroptiken, die zur Detektion verwendet werden, im Verhältnis zu den Fokussieroptiken, durch die der einfallende Strahl geht, überdimensioniert sind.

**4.** Vorrichtung nach Anspruch 1, umfassend eine bewegliche Halterung, auf der die zu messende reflektierende Oberfläche, welche die einer Probe ist, angeordnet ist.

**5.** Vorrichtung nach Anspruch 1, wobei die Quelle (10), die den einfallenden Lichtstrahl (19) emittiert, ein Laser ist.

**6.** Vorrichtung nach Anspruch 1, umfassend eine Lichtleitfaser zum Übermitteln des einfallenden Lichtstrahls (19).

**7.** Vorrichtung nach Anspruch 6, umfassend Teilerwürfel, die aus Y-förmigen Verbindungsstellen aus Lichtleitfasern ausgebildet sind.

**8.** Vorrichtung nach Anspruch 1, umfassend:

- eine weiße Lichtquelle (51), die eine starke richtungsabhängige Luminanz (52) aufweist,
- einen asphärischen Kondensor (53),
- eine achromatische Fokussierlinse (54),
- einen Monochromator (55) mit oder ohne Blazegitter,
- eine Drehscheibe (56)
- ein optisches System zum achromatischen Kollimieren (L1, L2) und ein Raumfilter (58),
- ein Filterträgerrad (59),
- einen ersten Teilerwürfel (60),
- eine Bezugsstrecke (61), die eine Fokussieroptik (L3) und eine Photodiode (64), die mit einem Steuerungs- und Erfassungsprozessor (65) verbunden ist, umfasst,
- eine Probenstrecke (62), die eine Fokussieroptik (L4) umfasst,
- eine Halterung (70), auf der die Probe angebracht wird und die über eine Verbindung, die ein Kommunikationsprotokoll über den Prozessor (65) verwendet, einstellbar ist,
- einen zweiten Teilerwürfel (71),
- eine Messstrecke (72), die eine achromatische Fokussieroptik (L5) und einen mit dem Prozessor (65) verbundenen Detektor (75) umfasst,
- eine Abbildungsstrecke (73), die eine achromatische Fokussieroptik (L6), ein Mikroskopobjektiv (77) und eine mit dem Prozessor (65) verbundene Kamera (78) umfasst.

**9.** Messverfahren zur Charakterisierung mittels Reflektometrie, wobei ein einfallender Lichtstrahl verarbeitet und geregelt wird, um ihn auf eine zu messende reflektierende Oberfläche in Form eines Lichtflecks zu fokussieren und diesen auf einem Detektor zu empfanden, wobei dieser Lichtfleck auf diesem Detektor und auf einer Kamera abgebildet wird, **dadurch gekennzeichnet, dass** die Daten am Ausgang dieser Kamera erfasst werden, um eine automatische Fokussierung des Lichtflecks auf der zu messenden reflektierenden Oberfläche auszuführen und die zu messende reflektierende Oberfläche automatisch der Oberfläche des Detektors zuzuordnen.

**10.** Verfahren nach Anspruch 9, wobei die zu messende reflektierende Oberfläche die Oberfläche einer Probe ist.

**11.** Verfahren nach Anspruch 9, wobei die Fläche dieses Lichtflecks kleiner ist als 5 mm$^2$.

**12.** Verfahren nach Anspruch 9, wobei Fokussieroptiken zur Detektion verwendet werden, die im Verhältnis zu den Fokussieroptiken, durch die der einfallende Strahl geht, überdimensioniert sind.

**13.** Verfahren nach Anspruch 10, umfassend folgende Schritte:

- Einschalten der Instrumente (E1),
- Auswähler der Spektralparameter (E2),
- Positionieren der Probe (E3),
- bei Durchlaufen aller Wellenlängen $\lambda i$ mit Änderung einer Variable i zwischen 0 und N (Schleife 45):
- Positionieren eines Monochromators auf der Strecke des einfallenden Strahls auf einer Wellenlänge $\lambda i$, wie etwa $\lambda i = \lambda$ min + i$\times\Delta\lambda$ (E4),

- Positionieren eines geeigneten Filters auf der Strecke des einfallenden Strahls (E5),
- Fokussieren dieses einfallenden Strahls auf die Probe dank der Bildbearbeitung (E6),
- Nachführen der Position der Probe (E7),
- Erfassen der Signale für die Messung (E8).

FIG. 1

FIG. 2

FIG. 3

FIG. 4A

FIG. 4B

REFLEXION (%)

FIG. 8A

X (nm)

FIG. 8B

FIG. 5

FIG. 6

FIG. 7A

FIG. 7B

## RÉFÉRENCES CITÉES DANS LA DESCRIPTION

**Documents brevets cités dans la description**

- US 20030071994 A

- US 5747814 A

**Littérature non-brevet citée dans la description**

- **Patrick Bouchareine.** Spectrométrie Optique. *Traité Mesures et Contrôle,* Octobre 1994, vol. R6310, 1-31

- **D. Enard ; H. Visser.** Universal spectrophotometer for determining the efficiency of optical components and systems. *Applied Optics,* 1982, vol. 21 (24), 4459-4464